# EUROPEAN PATENT APPLICATION

(11) **EP 4 181 090 A1**
(43) Date of publication of application: **17.05.2023**
(21) Application number: 22206634.2
(22) Date of filing: 10.11.2022
(51) Int. Cl.: G06V 20/58

(54) **INFORMATION PROCESSING APPARATUS AND PROGRAM**

(30) Priority: 12.11.2021 JP 2021185186
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: FUTAGAMI, Takuya, 212-0013 Kanagawa (JP); TAKAHASHI, Yusuke, 212-0013 Kanagawa (JP); SUZUKI, Yoshihiko, 212-0013 Kanagawa (JP); KOBAYASHI, Hiroyuki, 212-0013 Kanagawa (JP); OODAKE, Tatsuya, 212-0013 Kanagawa (JP); SETO, Naoto, 212-0013 Kanagawa (JP); KATO, Noriyasu, 212-0013 Kanagawa (JP); SEGAWA, Taisei, 212-0013 Kanagawa (JP); HATTORI, Yohei, 212-0013 Kanagawa (JP)
(74) Representative: AWA Sweden AB

(57) **Abstract**

According to one embodiment, the information processing apparatus includes an image interface, a communication interface, and a processor. The image interface is configured to acquire an image comprising an image of a railway track and an image of pieces of equipment. The communication interface is configured to acquire railway track information indicative of a geodetic coordinate of the railway track and equipment information indicative of geodetic coordinates of the pieces of equipment. The processor is configured to: specify, in the acquired image, a plurality of equipment regions in which the pieces of equipment appear; generate, based on coordinates of the equipment regions and the geodetic coordinates of the pieces of equipment, a transformation matrix for associating a geodetic coordinate with a coordinate in the acquired image; and specify a coordinate of the railway track by transforming the geodetic coordinate of the railway track using the transformation matrix.

## Description

### FIELD

Embodiments described herein relate generally to an information processing apparatus and a program.

### BACKGROUND

Some cars running on railway tracks acquire images of the front using a camera to detect obstacles. Such a car recognizes the railway track on which it travels from an image acquired by the camera. Based on the recognized railway track, the car specifies a region in the image through which it passes. The car detects obstacles based on images and other information within the specified region.

There is a demand for a technique that can realize effective railway track recognition from images for the purposes of obstacle detection, etc.

### BRIEF DESCRIPTION OF THE DRAWINGS

FIG. 1 is a schematic view showing a car system according to a first embodiment.
FIG. 2 is a block diagram showing a control system for a car according to the first embodiment.
FIG. 3 is a diagram showing an example of equipment information according to the first embodiment.
FIG. 4 is a diagram showing an exemplary operation of the car according to the first embodiment.
FIG. 5 is a diagram showing a railway track imaged by the car according to the first embodiment.
FIG. 6 is a diagram showing amounts of features in an acquired image according to the first embodiment.
FIG. 7 is a flowchart for explaining an exemplary operation of the car according to the first embodiment.
FIG. 8 is a schematic view showing objects including a railway track on which a car according to a second embodiment travels.
FIG. 9 is a top view showing the objects including the railway track on which the car according to the second embodiment travels.
FIG. 10 is a diagram showing an example of equipment information according to the second embodiment.
FIG. 11 is a flowchart for explaining an exemplary operation of the car according to the second embodiment.

### DETAILED DESCRIPTION

Embodiments will be described with reference to the drawings.

### (First Embodiment)

A car included in a car system according to an embodiment may constitute a part of a train traveling on a railway track. The car acquires an image of the front such that the imaging range covers the railway track on which it travels. The car recognizes the railway track from the image acquired by the imaging. The car sets its traveling region in the acquired image based on information such as a position of the recognized railway track. The car detects an obstacle or obstacles that can obstruct its running based on the set traveling region.

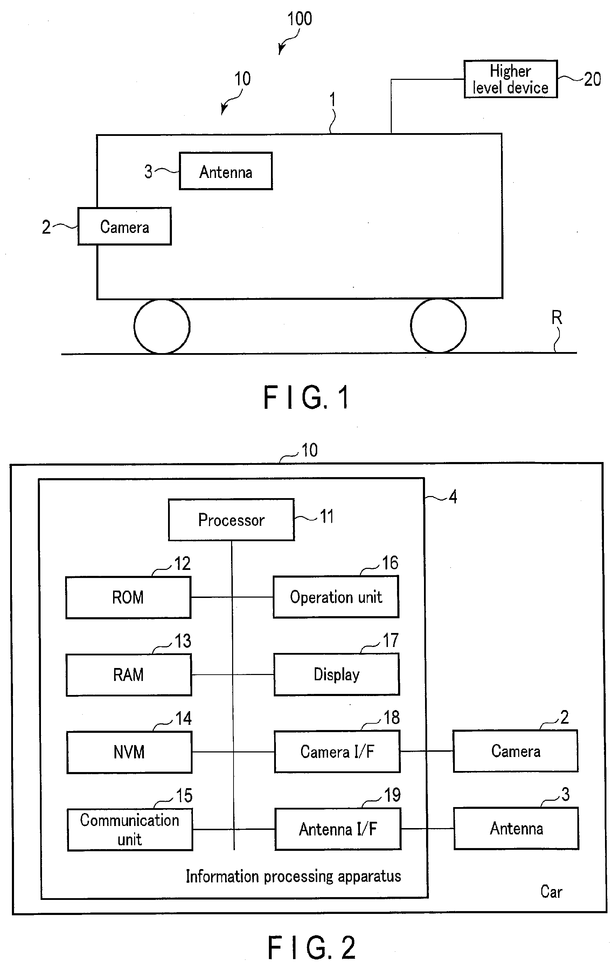

FIG. 1 is a schematic view showing a car system 100 according to the embodiment. As shown in FIG. 1, the car system 100 is formed of a car 10, a higher level device 20, etc. The car 10 and the higher level device 20 are communicably connected to each other.

The car 10 constitutes a part of a train traveling on a railway track R. The car 10 is operated by an operator and/or automatically to travel on the railway track R.

The car 10 includes a housing 1, a camera 2, an antenna 3, etc.

The housing 1 forms the outer shape of the car 10. In one example, the housing 1 is formed so that it can accommodate one or more persons, luggage, and so on.

The camera 2 is disposed at the front part of the housing 1. The camera 2 images in the traveling direction of the car 10. The camera 2 images the railway track R on which it travels, and also the area surrounding the railway track R.

The camera 2 is, for example, a charge-coupled device (CCD) camera. The camera 2 may include a lighting device to illuminate the front of the car 10.

The antenna 3 is provided for receiving signals for measuring the position of the car 10. In one example, the antenna 3 is an antenna for receiving signals of a global navigation satellite system (GNSS).

The higher level device 20 provides various information sets to the car 10. In one example, the higher level device 20 is a server managed by a railway company.

The higher level device 20 sends equipment information to the car 10. The equipment information is related to equipment (utility poles, speed signs, stop signs, etc.) that may be possibly imaged by the camera 2 of the car 10.

In one example, the higher level device 20 receives a request for equipment information from the car 10. The request includes information indicating the current coordinates (e.g., a latitude and a longitude) of the car 10. The higher level device 20, upon receiving the request, specifies the equipment to be possibly imaged by the camera 2 from the current coordinate information included in the request. Upon specifying the equipment, the higher level device 20 sends the equipment information about the specified equipment to the car 10 as a response to the request. The equipment information will be described in more detail later.

The higher level device 20 sends railway track information to the car 10. The railway track information indicates geodetic coordinates (coordinates measured by a GNSS or the like) where the railway track R on which the car 10 will travel is present.

In one example, the higher level device 20 receives a request for railway track information from the car 10. The higher level device 20, upon receiving the request, specifies the railway track R on which the car 10 will travel. Upon specifying the railway track R, the higher level device 20 sends a response including the railway track information indicating the geodetic coordinates of the specified railway track R to the car 10.

The railway track information includes, for example, a geodetic coordinate sequence (multiple sets of geodetic coordinates) indicative of multiple points on the railway track R.

The higher level device 20 sends gauge information to the car 10. The gauge information indicates a loading gauge and a structure gauge for the railway track R.

The loading gauge represents the largest dimension of the car in cross-section.

The structure gauge defines a clearance to the railway track, in which installation of any structure is prohibited.

In one example, the gauge information indicates the loading gauge and the structure gauge for each geodetic coordinate set of the railway track R.

The higher level device 20 receives a request for gauge information from the car 10. Upon receiving the request, the higher level device 20 sends a response including the gauge information to the car 10.

Next, the car 10 will be described.

FIG. 2 shows an exemplary configuration of the car 10 according to the embodiment. FIG. 2 is a block diagram showing an exemplary configuration of the car 10. The car 10, as shown in FIG. 2, includes an information processing apparatus 4, etc., in addition to the camera 2 and the antenna 3.

The information processing apparatus 4 specifies a coordinate sequence of the railway track R from one or more images acquired by the camera 2. The information processing apparatus 4 also detects an obstacle or obstacles that would obstruct the running of the car 10.

The information processing apparatus 4 includes a processor 11, a ROM 12, a RAM 13, an NVM 14, a communication unit 15, an operation unit 16, a display 17, a camera interface 18, an antenna interface 19, and so on.

The processor 11, the ROM 12, the RAM 13, the NVM 14, the communication unit 15, the operation unit 16, the display 17, the camera interface 18, and the antenna interface 19 are connected to one another via a data bus, etc. The camera interface 18 is connected to the camera 2. The antenna interface 19 is connected to the antenna 3.

The car 10 and the information processing apparatus 4 may discretionarily include other configurations or components in addition to those shown in FIG. 2, or may omit a given configuration or component from the car 10.

The processor 11 takes total control over the operations of the car 10. The processor 11 may include an internal cache and various interfaces. The processor 11 executes a program or programs which may be prestored in the internal memory, the ROM 12, and/or the NVM 14 to realize a variety of processes.

Various functions realized by the execution of a program or programs by the processor 11 may be partly implemented by a hardware circuit. In such instances, the processor 11 controls the functions performed by the hardware circuit.

The ROM 12 is a nonvolatile memory which prestores one or more control programs, control data, etc. The control program or programs and the control data stored in the ROM 12 are prepared and incorporated in advance according to the specification of the car 10.

The RAM 13 is a volatile memory. The RAM 13 temporarily stores data etc., which are being processed by the processor 11. The RAM 13 stores various application programs according to instructions from the processor 11. The RAM 13 may also store data required for executing an application program, a result of executing the application program, and so on.

The NVM 14 is a nonvolatile memory that permits data to be written and rewritten. The NVM 14 is constituted by, for example, a hard disk drive (HDD), a solid state drive (SSD), a flash memory, or the like. The NVM 14 stores one or more control programs, one or more application programs, various data sets, etc., according to the purposes of operation of the car 10.

The communication unit 15 is an interface (a communication interface) for data communication with the higher level device 20, etc. In one example, the communication unit 15 is connected to the higher level device 20 via a network. The communication unit 15 may be an interface for supporting, for example, wired or wireless local area network (LAN) connections.

The operation unit 16 receives a variety of operational inputs from an operator or operators (e.g., a train driver). The operation unit 16 sends signals corresponding to an input operation to the processor 11. The operation unit 16 may include a touch panel.

The display 17 displays image data provided from the processor 11. In one example, the display 17 includes a liquid crystal monitor. In instances where the operation unit 16 is constituted by a touch panel, the display 17 and the operation unit 16 may be an integral member.

The camera interface 18 is an interface (an image interface) connected to the camera 2. The camera interface 18 sends signals from the processor 11 to the camera 2. The camera interface 18 receives signals (e.g., acquired images) from the camera 2 and sends the signals to the processor 11.

The antenna interface 19 is an interface connected to the antenna 3. The antenna interface 19 measures the current position (geodetic coordinates) of the car 10 based on signals from the antenna 3, etc.

In one example, the antenna interface 19 measures a position based on signals from the antenna 3. Then, upon measuring the position, the antenna interface 19 utilizes map information including a position of the railway track R to fit the measured position onto the nearby railway track R. The position after this fitting is obtained by the antenna interface 19 as the current position of the car 10.

The antenna interface 19 sends the obtained current position to the processor 11.

Note that the function of the antenna interface 19 may be realized by the processor 11.

Note also that in instances where the car 10 is adapted to run by an automatic operating system, the information processing apparatus 4 may omit the operation unit 16 and the display 17.

Next, functions realized by the car 10 will be described. The car 10 realizes these functions by means of the processor 11 executing a program or programs stored in the internal memory, the ROM 12, and/or the NVM 14.

The processor 11 realizes a function of imaging the front of the car 10 using the camera 2.

The processor 11 causes, through the camera interface 18, the camera 2 to start imaging. With the imaging started, the processor 11 receives images acquired by the camera 2 (which may also be called an "acquired image" or "acquired images"). The processor 11 receives the acquired images from camera 2 in real time.

The processor 11 also realizes a function of acquiring equipment information.

For example, the processor 11 obtains the current position of the car 10 using the antenna 3 and the antenna interface 19. Upon obtaining the current position, the processor 11 generates a request for equipment information based on the current position. The request includes information indicating the current position. Upon generating the request, the processor 11 sends the generated request to the higher level device 20 through the communication unit 15.

After sending the request to the higher level device 20, the processor 11 receives a response including the equipment information from the higher level device 20 through the communication unit 15.

A description will be given of the equipment information.

The equipment information indicates geodetic coordinates of equipment that can appear in the images acquired by the camera 2.

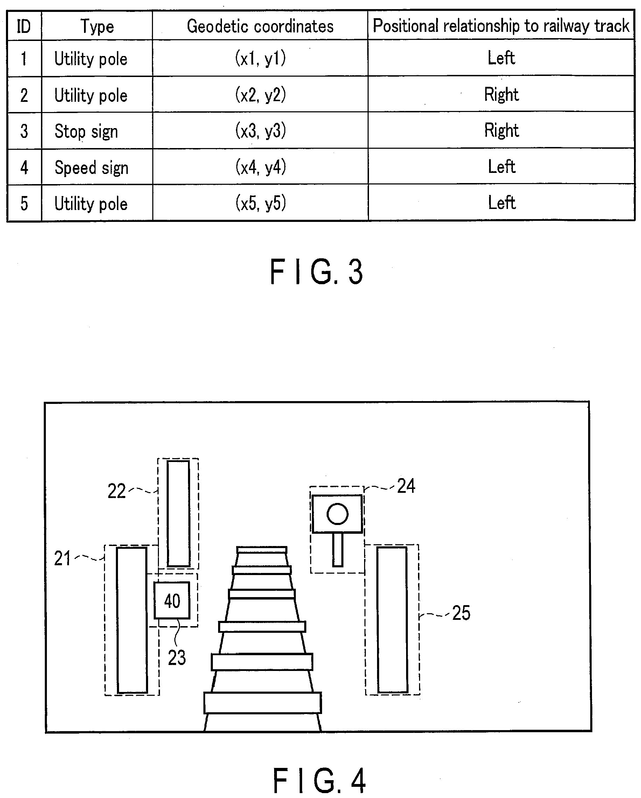

FIG. 3 shows an exemplary constitution of the equipment information. As shown in FIG. 3, the equipment information stores information items "ID", "Type", "Geodetic coordinates", and "Positional relationship to railway track" in association with each other.

The information "ID" is an identifier for identifying an intended piece of equipment. In this example, the "ID" uses a numerical value.

The information "Type" indicates the type of an intended piece of equipment. In this example, the "Type" is a utility pole, a stop sign, or a speed sign.

The information "Geodetic coordinates" indicate the geodetic coordinates of an intended piece of equipment. In this example, the "Geodetic coordinates" are the latitude and the longitude of the piece of equipment.

The information "Positional relationship to railway track" indicates, for example, on which side of the railway track R in the acquired image an intended piece of equipment is located. In other words, the "Positional relationship to railway track" in this example indicates whether the piece of equipment is located on the right side or the left side of the railway track R.

Note that the equipment information may discretionarily include other items or components in addition to those shown in FIG. 3, or may omit a given item or component therefrom. The equipment information is not limited to a particular structure.

The processor 11 also realizes a function of acquiring railway track information.

The processor 11 sends a request for railway track information to the higher level device 20 through the communication unit 15. The processor 11 receives a response including the railway track information from the higher level device 20 through the communication unit 15.

The processor 11 realizes a function of recognizing equipment appearing in the acquired images.

The processor 11 recognizes pieces of equipment from the acquired images according to one or more predetermined image recognition algorithms.

In one example, the NVM 14 prestores dictionary information for recognizing the equipment. For example, the dictionary information may include information related to amounts of features in images in which a piece of equipment appears, or a network attained from deep learning processes.

The processor 11 recognizes the equipment based on the dictionary information. Specifically, the processor 11 specifies the coordinates of a region in which the equipment appears (an equipment region). The coordinates here may be, for example, coordinates of one vertex, or central coordinates.

FIG. 4 shows an exemplary operation for the processor 11 to recognize pieces of equipment. FIG. 4 uses an example of the acquired image. Here, it is assumed that the processor 11 has recognized equipment regions 21 to 25.

The equipment region 21 is a region in which a utility pole appears as a piece of equipment.

The equipment region 22 is a region in which a utility pole appears as a piece of equipment.

The equipment region 23 is a region in which a speed sign appears as a piece of equipment.

The equipment region 24 is a region in which a stop sign appears as a piece of equipment.

The equipment region 25 is a region in which a utility pole appears as a piece of equipment.

Note that the processor 11 may recognize pieces of equipment based further on the equipment information.

For example, the processor 11 may limit search ranges for the respective pieces of equipment based on the information item "Positional relationship to railway track" in the equipment information. In this case, the processor 11 may set a search range to the right part of the acquired image, to search for the piece of equipment for which the "Positional relationship to railway track" indicates "Right". The processor 11 may specify the position of the railway track by image recognition so as to set the search range to the right side or the left side of the position of the railway track.

Also for example, the processor 11 may limit search ranges for the respective pieces of equipment based on the information item "Geodetic coordinates" in the equipment information. In this case, the processor 11 may set, in the acquired image, a search range that covers the area surrounding a region in which a piece of equipment is expected to appear, based on the "Geodetic coordinates" and the current position of the car 10.

The processor 11 further realizes a function of generating a transformation matrix for associating coordinates in the acquired image with geodetic coordinates, based on the coordinates of equipment regions and the railway track information.

The transformation matrix here is a matrix for transforming geodetic coordinates into coordinates in the acquired image. That is, the transformation matrix is a matrix employed for calculating coordinates in the acquired image, where an object present at given geodetic coordinates appears.

The processor 11 selects a predetermined number of equipment regions (e.g., four equipment regions) from among multiple equipment regions in the acquired image. Here, for example, the processor 11 selects the combination of equipment regions which forms the largest polygonal area by lines connecting their respective coordinate sets.

Upon selecting the equipment regions, the processor 11 obtains, from the equipment information, the geodetic coordinates of each piece of equipment that appears in the corresponding selected equipment region. For example, the processor 11 extracts from the equipment information the geodetic information for the IDs of the respective pieces of equipment that appear in the selected equipment regions.

Upon obtaining the geodetic coordinates of the pieces of equipment, the processor 11 uses one or more predetermined algorithms to generate a transformation matrix for associating the coordinates of each equipment region in the acquired image with the geodetic coordinates of the corresponding piece of equipment appearing in the equipment region.

The processor 11 realizes a function of generating a coordinate sequence of the railway track R in the acquired image using the transformation matrix.

Upon generating the transformation matrix, the processor 11 calculates a sequence of coordinates of the railway track R in the acquired image by applying the transformation matrix to the geodetic coordinate sequence of the railway track R indicated by the railway track information. That is, the processor 11 transforms the geodetic coordinate sequence indicating multiple points on the railway track R into a coordinate sequence in the acquired image.

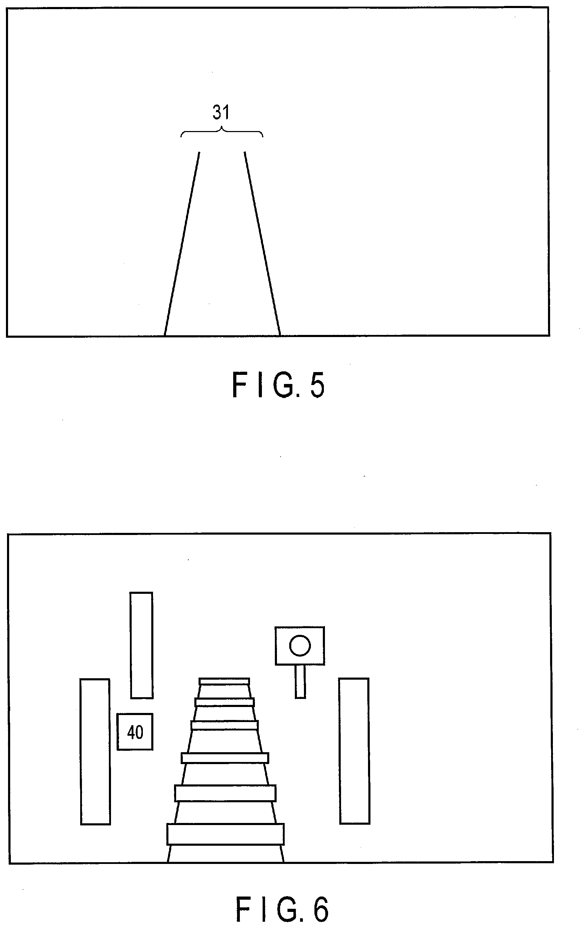

FIG. 5 shows coordinates of the railway track in an acquired image. In the example shown in FIG. 5, the processor 11 calculates a coordinate sequence 31 representing the railway track R. The processor 11 here calculates, as the coordinate sequence 31, a set of the right rail coordinate sequence and the left rail coordinate sequence of the railway track R.

Upon calculating the initial coordinate sequence 31, the processor 11 uses amounts of features in the acquired image to calculate an offset to be added to the coordinate sequence 31 so that the coordinates of the railway track in the acquired image are figured out.

Here, in one example, the processor 11 extracts, as the amounts of features in the acquired image, coordinates of edges in the acquired image by edge detection technique.

FIG. 6 shows amounts of features detected through the edge detection technique. As shown in FIG. 6, the processor 11 detects edges at the coordinates of the railway track (left and right rails in this example) in the acquired image.

Upon detecting the edge coordinates in the acquired image, the processor 11 calculates an evaluation value based on matching between the coordinate sequence 31 and the amounts of features (the edge coordinates). This example assumes that the evaluation value increases as the similarities of the coordinate sequence 31 to the amounts of features become larger.

The processor 11 calculates the evaluation value while adding an offset (an offset to the X and Y coordinates) to the coordinate sequence 31. The processor 11 determines the offset that maximizes the evaluation value while variably offsetting the coordinate sequence 31 in the X-axis direction and the Y-axis direction. For example, the processor 11 may vary an offset randomly or in the direction where an increase in the evaluation value is expected or obtained.

Upon determining the offset that maximizes the evaluation value, the processor 11 adds this offset to the coordinate sequence 31 and obtains the resultant coordinate sequence as the coordinate sequence representing the railway track R in the acquired image.

The processor 11 also realizes a function of acquiring gauge information indicating a loading gauge and a structure gauge.

The processor 11 sends a request for gauge information to the higher level device 20 through the communication unit 15. The processor 11 receives a response including the gauge information from the higher level device 20 through the communication unit 15.

The processor 11 realizes a function of setting a traveling region in the acquired image for the car 10 to travel through, based on the coordinate sequence of the railway track R in the acquired image and the gauge information.

Here, in one example, the processor 11 uses the coordinate sequence of the railway track R in the acquired image and the geodetic coordinates of the railway track R to calculate the sizes and the positions of the loading gauge and the structure gauge for each coordinate point on the railway track R in the acquired image. Upon calculating the sizes and the positions of the loading gauge and the structure gauge, the processor 11 sets the traveling region using the loading gauge and the structure gauge with these sizes and positions.

The processor 11 realizes a function of detecting an obstacle or obstacles that would obstruct the traveling of the car 10, based on the traveling region.

Upon setting the traveling region, the processor 11 detects an obstacle or obstacles that would obstruct the traveling of the car 10 in the traveling region. That is, the processor 11 detects obstacles interfering with the traveling region.

Upon detecting an obstacle, the processor 11 causes the display 17 to display information indicating an event of obstacle detection. For example, the processor 11 causes the display 17 to display a warning, etc.

Note that the processor 11 may differentiate the type of display between the instance of detecting an obstacle in the region corresponding to the loading gauge and the instance of detecting an obstacle in the region corresponding to the structure gauge. For example, in response to detecting an obstacle in the structure gauge region, the processor 11 may cause the display 17 to display a caution message. Also, in response to detecting an obstacle in the loading gauge region, the processor 11 may cause the display 17 to display a warning.

The processor 11 may utilize a warning sound output through a speaker, etc.

Next, an exemplary operation of the car 10 will be described.

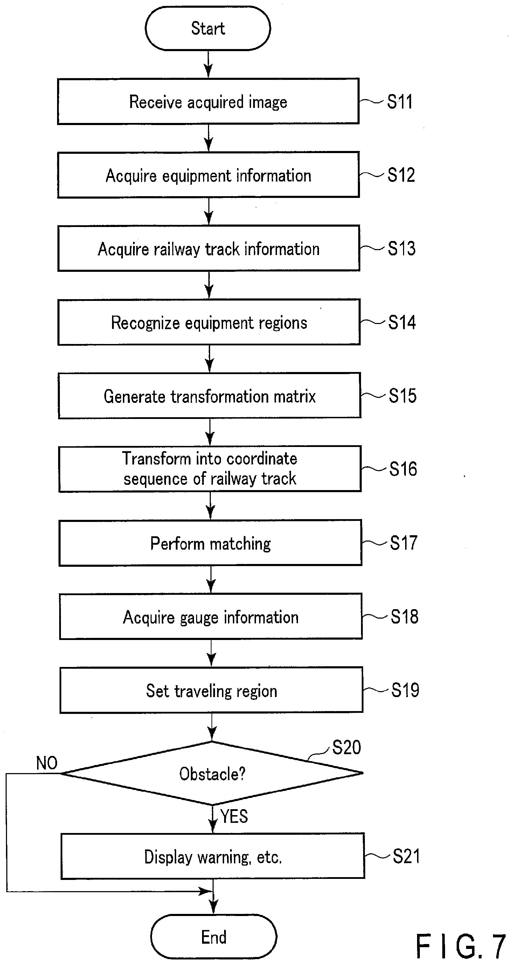

FIG. 7 is a flowchart for explaining an exemplary operation of the car 10. The description will assume that the car 10 is traveling on the railway track R.

First, the processor 11 of the car 10 receives an acquired image from the camera 2 (S11). Upon receiving the acquired image, the processor 11 acquires equipment information from the higher level device 20 through the communication unit 15 (S12).

Upon acquiring the equipment information, the processor 11 acquires railway track information from the higher level device 20 through the communication unit 15 (S13). Upon acquiring the railway track information, the processor 11 specifies one or more equipment regions in the acquired image (S14).

Upon specifying the one or more equipment regions, the processor 11 generates, based on the coordinates of the specified one or more equipment regions, a transformation matrix for transforming geodetic coordinates into coordinates in the acquired image (S15). Upon generating the transformation matrix, the processor 11 uses the transformation matrix to transform the geodetic coordinate sequence of the railway track R indicated by the railway track information into an initial coordinate sequence in the acquired image (S16).

Upon transforming the coordinate sequence, the processor 11 performs matching between the coordinate sequence after the transformation and the amounts of features in the acquired image to calculate the coordinate sequence of the railway track R in the acquired image (S17). Upon calculating the coordinate sequence of the railway track R in the acquired image, the processor 11 acquires gauge information from the higher level device 20 through the communication unit 15 (S18).

Upon acquiring the gauge information, the processor 11 sets a traveling region in the acquired image based on the coordinate sequence of the railway track R in the acquired image and the gauge information (S19). Upon setting the traveling region, the processor 11 detects the presence of any obstacles based on the traveling region (S20).

If it is determined that an obstacle is present (S20, YES), the processor 11 causes the display 17 to display a warning or the like (S21).

If it is determined that an obstacle is not present (S20, NO), or upon displaying a warning or the like on the display 17 (S21), the processor 11 terminates the operation.

Note that the processor 11 may repeat the operation from S11 to S21 at given intervals.

Equipment to be recognized by the processor 11 from acquired images may include a marker, etc.

The processor 11 may control the display 17 to display a coordinate sequence of the railway track R in a superimposing manner on the acquired image. The processor 11 may also control the display 17 to display a traveling region in a superimposing manner on the acquired image.

The processor 11, in response to detecting an obstacle, may automatically stop the car 10. The processor 11 may inform the higher level device 20 of an event of obstacle detection through the communication unit 15.

With the configuration described above, a car recognizes equipment in an acquired image. The car generates a transformation matrix based on geodetic coordinates of the equipment and coordinates of the equipment in the acquired image. The car transforms geodetic coordinates of a railway track into coordinates in the acquired image using the transformation matrix. According to the configuration, the car can effectively acquire the coordinates of a railway track in the acquired image even in instances where image processing techniques cannot allow for secure recognition of the railway track due to, for example, a distant part of the railway track appearing in a very small size in the acquired image.

### (Second Embodiment)

The second embodiment will be described.

A car according to the second embodiment differs from the car according to the first embodiment in that it recognizes a railway track from an acquired image based on an inclination in the location where equipment is present. For the remaining respects, the description will use the same reference signs as in the first embodiment and basically omit their detailed explanations.

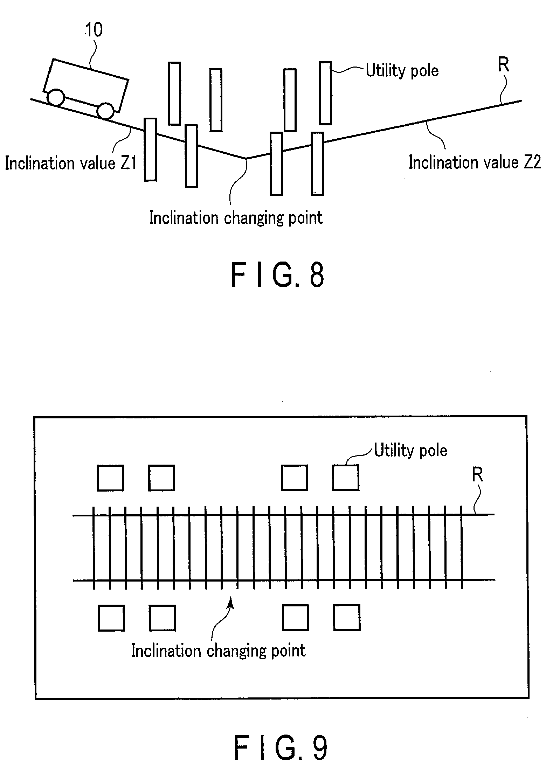

FIG. 8 is a side view of a railway track R on which a car 10 according to the second embodiment travels, and also pieces of equipment around the railway track R. FIG. 9 is a top view of the railway track R and the pieces of equipment.

As shown in FIGS. 8 and 9, the railway track R in this example has an inclination which changes at an inclination changing point. Here, the railway track R until the inclination changing point is laid on a region of an inclination value Z1. The railway track R from the inclination changing point and onward is laid on a region of an inclination value Z2. The inclination value may be a value per mill or an angle value.

It will be assumed that the car 10 is at a portion of the railway track R that is laid on the region of the inclination value Z1. From the current position, the car 10 proceeds to the railway track R that is laid on the region of the inclination value Z2.

Pieces of equipment (in this example, utility poles) are set in the region of the inclination value Z1. Pieces of equipment (in this example, utility poles) are also set in the region of the inclination value Z2.

An image acquired by the camera 2 covers the railway track R and the equipment pieces laid on the region of the inclination value Z1. The image acquired by the camera 2 also covers the railway track R and the equipment pieces laid on the region of the inclination value Z2.

The railway track information includes inclination values of the railway track R. More specifically, the railway track information includes inclination values for the respective geodetic coordinate sets of the railway track R.

Meanwhile, the equipment information further includes inclination values.

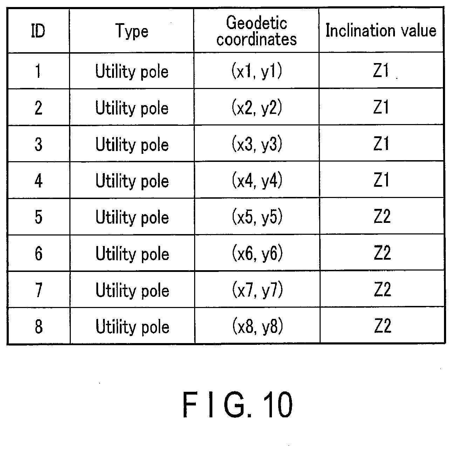

FIG. 10 shows exemplary items constituting the equipment information according to the second embodiment. As shown in FIG. 10, the equipment information stores information items "ID", "Type", "Geodetic coordinates", and "Inclination value" in association with each other.

The information "ID", "Type", and "Geodetic coordinates" are as described above.

The information "Inclination value" indicates the inclination value of a region where the corresponding piece of equipment is located. In this example, the "Inclination value" is either Z1 or Z2. As shown in FIG. 10, the pieces of equipment having the respective "ID" numbers of 1 to 4 are located in the region of the inclination value Z1. Also, the pieces of equipment having the respective "ID" numbers of 5 to 8 are located in the region of the inclination value Z2.

Note that the equipment information may additionally include the information item "Positional relationship to railway track". The equipment information may discretionarily include other items or components in addition to those shown in FIG. 10, or may omit a given item or component therefrom. The equipment information is not limited to a particular structure.

Next, functions realized by the car 10 according to this embodiment will be described. The car 10 realizes these functions by means of the processor 11 executing a program or programs stored in the internal memory, the ROM 12, and/or the NVM 14.

The car 10 according to the second embodiment realizes the following functions in addition to the functions discussed for the first embodiment.

The processor 11 realizes a function of generating a transformation matrix for each inclination value.

Here, it is assumed that the processor 11 has recognized equipment regions from the acquired image.

The processor 11 obtains, from the equipment information, the inclination values for the recognized pieces of equipment. For example, the processor 11 extracts from the equipment information the inclination values for the respective IDs of the recognized pieces of equipment.

Upon obtaining the inclination values for the pieces of equipment, the processor 11 sets a predetermined inclination value (e.g., Z1).

Upon setting the predetermined inclination value, the processor 11 specifies equipment regions of the pieces of equipment that correspond to the set inclination value. Upon specifying the equipment regions, the processor 11 selects a predetermined number of equipment regions (e.g., four equipment regions) from among the specified equipment regions. Here, for example, the processor 11 selects the combination of equipment regions which forms the largest polygonal area by lines connecting their respective coordinate sets.

Upon selecting the equipment regions, the processor 11 obtains, from the equipment information, the geodetic coordinates of each piece of equipment that appears in the corresponding selected equipment region. For example, the processor 11 extracts from the equipment information the geodetic information for the IDs of the respective pieces of equipment that appear in the selected equipment regions.

Upon obtaining the geodetic coordinates of the pieces of equipment, the processor 11 generates a transformation matrix for associating the coordinates of each equipment region in the acquired image with the geodetic coordinates of the corresponding piece of equipment appearing in the equipment region. With the processor 11, the generated transformation matrix is obtained as a transformation matrix for the set inclination value (e.g., Z1). That is, the transformation matrix here is a matrix for transforming geodetic coordinates of an object located in the region of the set inclination value into coordinates in the acquired image.

The processor 11 sets another inclination value (e.g., Z2) different from the predetermined inclination value. Upon setting another inclination value, the processor 11 generates a transformation matrix for the set inclination value (e.g., Z2) in a similar manner.

The processor 11 realizes a function of generating a coordinate sequence of the railway track R in the acquired image using the transformation matrix for each inclination value.

The processor 11 sets a predetermined inclination value (e.g., Z1). Upon setting the predetermined inclination value, the processor 11 extracts a geodetic coordinate sequence for the set inclination value from the railway track information.

Upon obtaining the geodetic coordinate sequence, the processor 11 calculates a coordinate sequence in the acquired image by applying the transformation matrix generated for the set inclination value to the geodetic coordinate sequence. That is, the processor 11 transforms the geodetic coordinate sequence into a coordinate sequence in the acquired image.

Upon calculating the coordinate sequence in the acquired image, the processor 11 sets another inclination value (e.g., Z2). Upon setting another inclination value, the processor 11 uses the transformation matrix generated for this inclination value to transform, in a manner similar to the above, the geodetic coordinate sequence for the set inclination value into a coordinate sequence in the acquired image.

The processor 11 transforms a geodetic coordinate sequence into a coordinate sequence in the acquired image for each of the inclination values.

The processor 11 integrates the coordinate sequences obtained by transformation with the transformation matrices for the respective inclination values to generate a single coordinate sequence. Upon generating this single coordinate sequence, the processor 11 uses amounts of features in the acquired image to calculate an offset to be added to the coordinate sequence so as to figure out the coordinates of the railway track, in a manner similar to the first embodiment.

The processor 11 adds the offset to the single coordinate sequence after the integration and obtains the resultant coordinate sequence as the coordinate sequence representing the railway track R in the acquired image.

The processor 11 realizes a function of setting a traveling region in the acquired image for the car 10 to travel through, based on the coordinate sequence of the railway track R, the inclination values for the railway track R, and the gauge information.

Here, in one example, the processor 11 uses the coordinate sequence of the railway track R in the acquired image, the inclination values for the railway track R, and the geodetic coordinates of the railway track R to calculate the sizes and the positions of the loading gauge and the structure gauge for each coordinate point on the railway track R in the acquired image. Upon calculating the sizes and the positions of the loading gauge and the structure gauge, the processor 11 sets the traveling region using the loading gauge and the structure gauge with these sizes and positions.

Next, an exemplary operation of the car 10 according to this embodiment will be described.

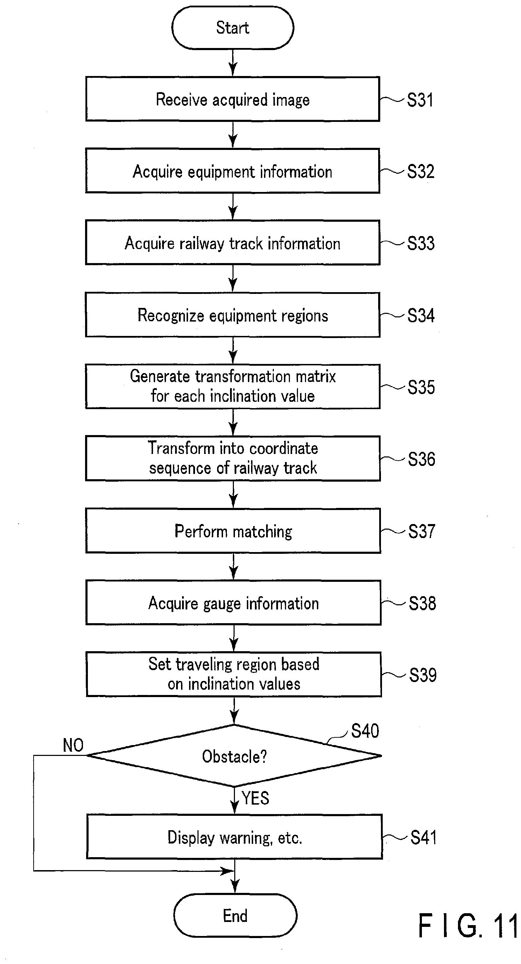

FIG. 11 is a flowchart for explaining an exemplary operation of the car 10. The description will assume that the car 10 is traveling on the railway track R.

First, the processor 11 of the car 10 receives an acquired image from the camera 2 (S31). Upon receiving the acquired image, the processor 11 acquires equipment information from the higher level device 20 through the communication unit 15 (S32).

Upon acquiring the equipment information, the processor 11 acquires railway track information from the higher level device 20 through the communication unit 15 (S33). Upon acquiring the railway track information, the processor 11 specifies one or more equipment regions in the acquired image (S34).

Upon specifying the one or more equipment regions, the processor 11 generates, based on the coordinates of the specified one or more equipment regions, a transformation matrix for each inclination value (S35). Upon generating the transformation matrix for each inclination value, the processor 11 uses the transformation matrix for each inclination value and the railway track information to transform the geodetic coordinate sequence of the railway track R into a coordinate sequence in the acquired image (S36).

Upon transforming the coordinate sequence, the processor 11 performs matching between the coordinate sequence after the transformation and the amounts of features in the acquired image to calculate the coordinate sequence of the railway track R in the acquired image (S37). Upon calculating the coordinate sequence of the railway track R in the acquired image, the processor 11 acquires gauge information from the higher level device 20 through the communication unit 15 (S38).

Upon acquiring the gauge information, the processor 11 sets a traveling region in the acquired image based on the coordinate sequence of the railway track R in the acquired image, the inclination values for the railway track R, and the gauge information (S39). Upon setting the traveling region, the processor 11 detects the presence of any obstacles based on the traveling region (S40).

If it is determined that an obstacle is present (S40, YES), the processor 11 causes the display 17 to display a warning or the like (S41).

If it is determined that an obstacle is not present (S40, NO), or upon displaying a warning or the like on the display 17 (S41), the processor 11 terminates the operation.

Note that the processor 11 may repeat the operation from S31 to S41 at given intervals.

The processor 11 may acquire the inclination values of the respective points on the railway track R separately from the railway track information. The processor 11 may acquire the inclination values of the equipment separately from the equipment information.

With the configuration described above, a car generates a transformation matrix for each inclination value of a region where a piece of equipment is located. The car transforms a geodetic coordinate sequence of a railway track into a coordinate sequence in an acquired image using the transformation matrix. According to the configuration, the car can effectively acquire the coordinate sequence of a railway track in the acquired image even in instances where regions of equipment and the railway track vary in inclination.

While certain embodiments have been described, they have been presented by way of example only, and they are not intended to limit the scope of the inventions. Indeed, the novel embodiments described herein may be worked in a variety of other forms. Furthermore, various omissions, substitutions, and changes in the form of the embodiments may be made without departing from the spirit of the inventions. The embodiments and their modifications are covered by the accompanying claims and their equivalents, as would fall within the scope and gist of the inventions.

## Claims

1. An information processing apparatus comprising:
an image interface configured to acquire an image comprising an image of a railway track and an image of pieces of equipment;
a communication interface configured to acquire railway track information indicative of a geodetic coordinate of the railway track and equipment information indicative of geodetic coordinates of the pieces of equipment; and
a processor configured to
specify, in the acquired image, a plurality of equipment regions in which the pieces of equipment appear,
generate, based on coordinates of the equipment regions in the acquired image and the geodetic coordinates of the pieces of equipment, a transformation matrix for associating a geodetic coordinate with a coordinate in the acquired image, and
specify a coordinate of the railway track in the acquired image by transforming the geodetic coordinate of the railway track using the transformation matrix.

2. The information processing apparatus according to claim 1, wherein the processor is configured to
extract a feature amount in the acquired image,
calculate, while adding an offset to the coordinate of the railway track transformed from the geodetic coordinate, an evaluation value based on matching between the offset-added coordinate and the feature amount,
determine, based on the evaluation value, an offset to be added to the coordinate of the railway track transformed from the geodetic coordinate so as to figure out the coordinate of the railway track, and
add the determined offset to the coordinate of the railway track transformed from the geodetic coordinate to figure out the coordinate of the railway track in the acquired image.

3. The information processing apparatus according to claim 2, wherein the feature amount is extracted by edge detection.

4. The information processing apparatus according any one of claims 1 to 3, wherein
the communication interface is configured to acquire gauge information indicative of a loading gauge or a structure gauge for the railway track, and
the processor is configured to set a traveling region in the acquired image for a car which travels on the railway track, based on the gauge information and the coordinate of the railway track in the acquired image.

5. The information processing apparatus according to claim 4, wherein the processor is configured to detect an obstacle obstructing traveling of the car, based on the traveling region.

6. The information processing apparatus according any one of claims 1 to 5, wherein the processor is configured to
select a predetermined number of equipment regions from the plurality of the equipment regions, and
generate the transformation matrix based on coordinates of the selected equipment regions.

7. The information processing apparatus according to claim 6, wherein the processor is configured to select a combination of the equipment regions which forms a largest polygonal area by lines connecting respective coordinates of the selected equipment regions.

8. The information processing apparatus according any one of claims 1 to 7, wherein
the equipment information comprises inclination values of regions where the pieces of equipment are located, and
the processor is configured to generate the transformation matrix for each inclination value.

9. The information processing apparatus according any one of claims 1 to 8, wherein the equipment comprises one of a utility pole, a speed sign, or a stop sign.

10. The information processing apparatus according to claim 4 or 5, wherein the image interface is configured to acquire the image from a camera configured to image a front of the car.

11. The information processing apparatus according to claim 4 or 5, further comprising an antenna interface connected to an antenna for receiving a signal for measuring a position of the car, wherein
the equipment information is indicative of the geodetic coordinates of the pieces of equipment imaged from the car.

12. A program executable by a processor, the program causing the processor to realize functions comprising:
a function of acquiring an image comprising an image of a railway track and an image of pieces of equipment;
a function of acquiring railway track information indicative of a geodetic coordinate of the railway track and equipment information indicative of geodetic coordinates of the pieces of equipment;
a function of specifying, in the acquired image, a plurality of equipment regions in which the pieces of equipment appear;
a function of generating, based on coordinates of the equipment regions in the acquired image and the geodetic coordinates of the pieces of equipment, a transformation matrix for associating a geodetic coordinate with a coordinate in the acquired image, and
a function of specifying a coordinate of the railway track in the acquired image by transforming the geodetic coordinate of the railway track using the transformation matrix.
